# EUROPEAN PATENT SPECIFICATION

(11) **EP 0 895 927 B1**
(45) Date of publication and mention of the grant of the patent: **15.10.2003**
(21) Application number: 98306271.2
(22) Date of filing: 05.08.1998
(51) Int. Cl.: B62M 11/16

(54) **Hub transmission for a bicycle**
Antriebsnabe für Fahrrad
Moyeu d'entraînement pour bicyclette

(30) Priority: 08.08.1997 JP 21523797
(43) Date of publication of application: 10.02.1999
(73) Proprietor: SHIMANO INC., Osaka (JP)
(72) Inventor: Tabe, Koshi, Sakai-shi, Osaka (JP)
(74) Representative: Murnane, Graham John

(56) References cited:
- DE-A- 1 750 897
- US-A- 3 603 178
- US-A- 3 803 932
- US-A- 4 229 997

## Description

### Background of the Invention

The present invention relates to a shifter hub, and more particularly to an internal bicycle shifter hub for changing the speed of rotation of an input unit at a selected gear ratio and transmitting the result to an output unit, and allowing this gear ratio to be switched by centrifugal force.

Small bicycles (referred to as "BMX") having 20-inch wheels are used in off-road motocross racing. In such BMX bicycles for motocross racing, the rear wheel is commonly driven at a fixed gear ratio of about 43 teeth on the chainwheel and about 16 teeth on the hub cog of the rear wheel.

A fast start dash is an important element of BMX motocross racing. Downshifting to a slightly lighter gear ratio than during normal riding is recommended during startup in order to achieve higher startup acceleration. For this reason, BMX bicycles used in motocross racing are equipped with an external shifter (comprising a rear derailleur and a hub cog having two cross-ratio sprockets) and a shifting lever linked by a cable to the rear derailleur.

Installing an external shifter, however, makes it necessary for the rider to control this shifter by operating a shifting lever. Since BMX motocross racing involves navigating a course having a succession of small bumps and curves, the rider is busy steering and does not have much time for shifting. Consequently, it is very difficult to shift gears during a race.

In view of this, it is possible to adopt an approach whereby the rear wheel is equipped with an internal shifter hub, and the gears are shifted as a result of the fact that the speed of the internal shifter hub is automatically shifted by centrifugal force in accordance with the bicycle speed. Such an internal shifter hub is described in Japanese Patent Publication 49-20656. This internal shifter hub comprises a hub axle, a driver capable of rotating about the hub axle, a hub shell, a planetary gear mechanism for changing the speed of rotation of the driver and transmitting the result to the hub shell, a clutch mechanism for transmitting the output of the planetary gear mechanism to the hub shell or stopping such a transmission, and a support sleeve disposed between the planetary gear mechanism and the hub shell.

The planetary gear mechanism comprises an inner-tooth gear, a sun gear, a plurality of planetary gears for engaging the inner-tooth gear and the sun gear, and a carrier for supporting the plurality of planetary gears. The clutch-switching mechanism comprises a weight member that is swung by centrifugal force, and a control member that moves in a circle in response to the swinging of the weight member. The weight member and control member are mounted on a weight support, itself mounted rotatably in the support sleeve. The weight support is linked to the inner-tooth gear, and the clutch mechanism has a rocking clutch pawl that is housed in the weight support.

In such an internal shifter hub, the clutch mechanism is kept in a disengaged state by the clutch-switching mechanism, the rotation of the driver is transmitted to the hub shell via the carrier and a support sleeve, and the hub shell is directly driven until a prescribed centrifugal force is produced. The weight member of the clutch-switching mechanism is swung and the control member is switched from the disengaged state to a linked state when the hub is rotated and the centrifugal force surpasses a prescribed level. When this happens, the rotation of the driver is outputted to the weight support via the carrier, planetary gears, and inner-tooth gear, power is transmitted from the weight support to the hub shell via the clutch mechanism, and the hub shell is driven in an upshifted mode.

In the conventional structure described above, the bicycle is driven in an upshifted mode through the intermediary of a planetary gear mechanism during normal riding because of a switch from directly coupled driving to upshifted driving. In the planetary gear mechanism, the power transmission efficiency is lowered because power is transmitted via a plurality of gears. Consequently, the conventional structure described above performs upshifted driving during normal riding, and the power transmission efficiency during normal riding is therefore lowered in comparison with the efficiency achieved at the beginning of the ride.

To increase the power transmission efficiency during normal riding, downshifting should be performed with the aid of the.planetary gear mechanism during startup, and the driver and the hub shell should be directly coupled once the centrifugal force has exceeded a prescribed level. Two power transmission paths should be formed in order to realize this concept: a downshifted path for transmitting rotation from the driver to the hub shell via the inner-tooth gear, planetary gears, and carrier; and a direct-coupled path for transmitting rotation from the driver directly to the hub shell. These two paths should be switched by the clutch mechanism. In view of this, a structure has been proposed in which the weight support of the conventional internal shifter hub described above is nonrotatably linked to the hub shell, a clutch mechanism is provided between the driver and the weight support, and the weight support is linked to the carrier. In this structure, power is transmitted to the hub shell via the driver, inner-tooth gear, planetary gears, carrier, and weight support in the case of the downshifted path, and via the driver, control member, and weight support in the case of the direct-coupled path.

To be linked into such a structure, the weight support and the hub shell are commonly joined by welding, riveting, or another fixing means. When the weight support and hub shell are linked by such a fixing means, they can be easily aligned, and the alignment accuracy does not deteriorate. The rotation balance of the two members rotating at a high speed is therefore difficult to disrupt. It is, however, impossible to take apart the two members linked by a fixing means. The inability to disassemble the weight member and the hub shell makes it more difficult to replace or adjust the weight member. The inability to replace or adjust the weight member makes it impossible to alter the shift timing or to adjust it in accordance with the course profile or rider preferences during a motocross.

In view of this, a proposal has been made to link the hub shell and the weight member with the aid of a plurality of bolts. When the weight member and the hub shell are linked with the aid of a plurality of bolts, however, much labour is involved in tightening the bolts during assembly or in removing them during disassembly, making it necessary to align and link the two members each time they are assembled and further complicating the assembly operations.

Meanwhile, a structure in which the hub shell and the slave cylinder of the free hub are fastened with the aid of a cylindrical bolt is described in Japanese Utility-Model Publication 1-13605 as a possible solution for a bicycle free hub. Linking the two members with such a single cylindrical bolt facilitates disassembly and assembly and makes it possible to align the two members. A similar arrangement is known from DE-C-3 346 794.

US-A-4 229 997 or US-A-3 603 178 diclose a weight support member connected respectively either to the output side of the planatary gear mechanism or connected directly to the driver without intermediate clutch. In both documents no direct fastening connection is provided between weight support and slave. DE-A-1 750 897 shows weight members connected either to the driver, to the ring gear, to the gear carrier or to the hub housing.

An object of the present invention is to facilitate the assembly and disassembly of an internal shifter hub in which the gear ratio can be switched by centrifugal force.

Another object of the present invention is to make it easier to align two demountable members.

### Summary of the Invention

The present invention is directed to an internal bicycle shifter hub in accordance with Claim, 1, and comprises a hub axle, a driver, a slave, a power transmitting mechanism, a control member, a clutch-switching mechanism, and a cylindrical bolt. The hub axle is an axle fixable on a bicycle frame. The driver can rotate about the hub axle and can be linked to the input unit. The slave can rotate about the hub axle and can be linked to the output unit. The power transmitting mechanism is a mechanism that is disposed between the driver and slave and that is designed to change the speed of rotation received from the driver and to transmit the result to the slave. The clutch mechanism is a mechanism for linking and disengaging the slave and the driver. The clutch-switching mechanism has a weight member that is swung by centrifugal force from a first position on the inner circumference to a second position on the outer circumference, a control member capable of moving in a circle about the hub axle between a linked position in which the clutch mechanism is in a linked state and a disengaged position in which the mechanism is in a disengaged state, and that is capable of moving in a circle in response to the swinging of the weight member, and a weight support that carries the weight member and control member, that can rotate about the hub axle, that is linked to the driver via the clutch mechanism, and that is linked to the output side of the power transmitting mechanism. The cylindrical bolt is disposed coaxially with the hub axle and links and fastens the weight support and the slave.

In this internal shifter hub, the weight member in the first position swings into the second position when the input unit starts rotating and a prescribed centrifugal force acts on the weight member. The control member is disposed in a disengaged position or a linked position when the weight member is in the first position. The clutch mechanism assumes a disengaged state, the driver and the weight support are disengaged, and the rotation of the driver is changed in speed and outputted by the power transmitting mechanism and transmitted to the slave via the weight support when the control member has reached the disengaged position. In addition, the clutch mechanism assumes a linked state, the driver and the weight support are linked, and the rotation of the driver is outputted unchanged to the slave via the weight support when the control member has reached the linked position. The control member rotates from the disengaged position to the linked position or from the linked position to the disengaged position when the weight member swings from the first position to the second position. As a result, a switch from shifting by the power transmitting mechanism to direct coupling occurs when the control member has moved from the disengaged position to the linked position, and a switch from direct coupling to shifting by the power transmitting mechanism occurs when the control member has moved from the linked position to the disengaged position. Here, the weight support and the slave are disposed coaxially with the hub axle and are linked by the cylindrical bolt, and can thus be readily assembled or disassembled merely by tightening or loosening the cylindrical bolt. In addition, the alignment of the two demountable members can be facilitated by providing the cylindrical bolt with a tapered surface or the like.

Preferably, the weight support and the slave are nonrotatably linked by a serrated joint. In this case, the two members are linked by a serrated joint, and can thus be aligned in phase and securely linked in a nonrotatable fashion.

Preferably, the weight support has a sloping section on the inner circumferential surface of the mounting hole for the cylindrical bolt; and the cylindrical bolt has, on the outer circumferential surface of one of its ends, a protruding section provided with a sloping surface for interlocking with the sloping section. In this case, the two members can be aligned merely by tightening the cylindrical bolt because the sloping section interlocks with the sloping surface.

Preferably, the weight support is made of an alloy steel, and the slave is made of a light metal. In this case the weight of the entire hub can be reduced by constructing the weight support (which is required to have adequate strength) alone from an alloy steel of high specific gravity.

Preferably, the clutch mechanism comprises a linking pawl element that is mounted on the outer circumferential surface of the weight support while allowed to swing between the linked state and disengaged state, and that is switched between the linked state and disengaged state by the control member; a linking tooth element that is provided to the inner circumferential surface of the driver and that is capable of stopping the linking pawl element in the linked state; and an energizing member for pushing the linking pawl element toward the linked state. In this case, the linking pawl element is brought into the disengaged state and the rotation of the driver is not transmitted to the slave when the control member has reached the disengaged position by rotation. The linking pawl element is pushed toward the linked state by the energizing member and the tip of this element is stopped by the linking tooth element when the linked state is established. Consequently, the rotation of the driver is transmitted directly to the weight support. Here, a clutch mechanism capable of assuming a linked or disengaged state can be obtained with the aid of a simple arrangement in which a linking pawl element performs a swinging motion.

Preferably, the hub shifter further comprises a one-way clutch that is disposed between the weight support and the output side of the power transmitting mechanism and that causes the weight support to rotate in the travelling direction in response to the rotation of the power transmitting mechanism in the travelling direction. In this case, rotation in the travelling direction alone can be transmitted from the output side to the weight support when the clutch mechanism is in a disengaged state, and no rotation is transmitted from the output side to the weight support when the clutch mechanism is in a linked state and the weight support rotates in the travelling direction at a higher speed than does the output side.

Preferably, the power transmitting mechanism is a planetary gear mechanism comprising an inner-tooth gear provided to the driver, a sun gear provided to the hub axle, a plurality of planetary gears that mesh with the inner-tooth gear and sun gear, and a frame body that is capable of rotating about the hub axle and that is rotatably supported on the planetary gears. In this case, the rotation of the driver is transmitted from the inner-tooth gear to the planetary gear mechanism, reduced in speed, and outputted to the slave from the frame body. For this reason, the rotation of the driver is reduced in speed and transmitted with the slave during startup, making it possible to lightly step on the pedals and to accelerate the start dash by initially bringing the clutch mechanism into a disengaged state and establishing a linked state with the aid of a centrifugal force. Another feature is that because a linked state is established and a direct link is achieved during normal riding, rotation can be transmitted by the planetary gear mechanism highly efficiently without any reduction in transmission efficiency. In addition, gear ratios ranging from high gear ratios to low gear ratios can be freely obtained within a narrow space with the aid of the planetary gear mechanism.

### Brief Description of the Drawings

Figure 1 shows a side view of a bicycle according to a first embodiment of the present invention.
Figure 2 shows a longitudinal section of an internal shifter hub according to the present invention.
Figure 3 shows a fragmentary cross section of the internal shifter hub according to the present invention.
Figures 4a and 4b show schematic diagrams of a planetary gear mechanism.
Figure 5 shows an exploded perspective view of the internal shifter hub.
Figure 6 shows cross section VI-VI of Figure 3 wherein the clutch is in a disengaged state.
Figure 7 shows a front view of a control plate, with the clutch in a disengaged state.
Figure 8 shows a cross section VI-VI of Figure 3 wherein the clutch is in a linked state.
Figure 9 shows a front view of a control plate, with the clutch in a linked state.
Figure 10a shows cross section VI-VI of Figure 3 with the clutch in a disengaged state, according to another embodiment of the present invention.
Figure 10b shows cross section VI-VI of Figure 3 with the clutch in a linked state, according to another embodiment of the present invention.

### Detailed Description of the Embodiments

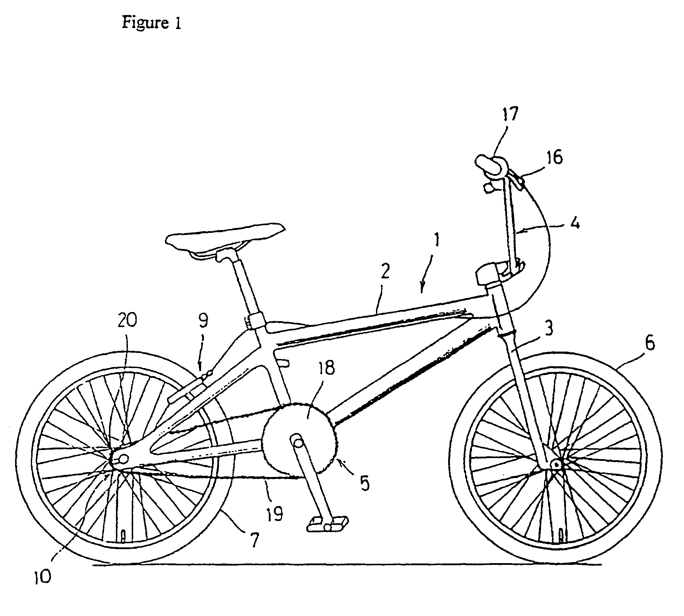

In Figure 1, the bicycle obtained by adopting an embodiment of the present invention is a BMX bicycle that comprises a frame 1 composed of a diamond-shaped frame body 2 and a front fork 3, a handle component 4, a driver unit 5, a front wheel 6, a rear wheel 7 provided with a two-speed internal shifter hub 10, and a cantilever-shaped sidepull rear brake device 9 for braking the rear wheel 7.

Components such as a saddle 11, the handle component 4, the front wheel 6, and the rear wheel 7 are mounted on the frame 1.

The handle component 4 has a handle stem 14 that is fixed to the top of the front fork 3, and a handlebar 15 that is fixed to the handle stem 14. A brake lever 16 and a grip 17, which constitute the rear brake device 9, are mounted on the right end of the handlebar 15.

The driver unit 5 comprises a chainwheel 18 mounted in the lower portion (bottom bracket) of the frame body 2, a chain 19 wound around the chainwheel 18, and an internal shifter hub 10 equipped with a sprocket 20.

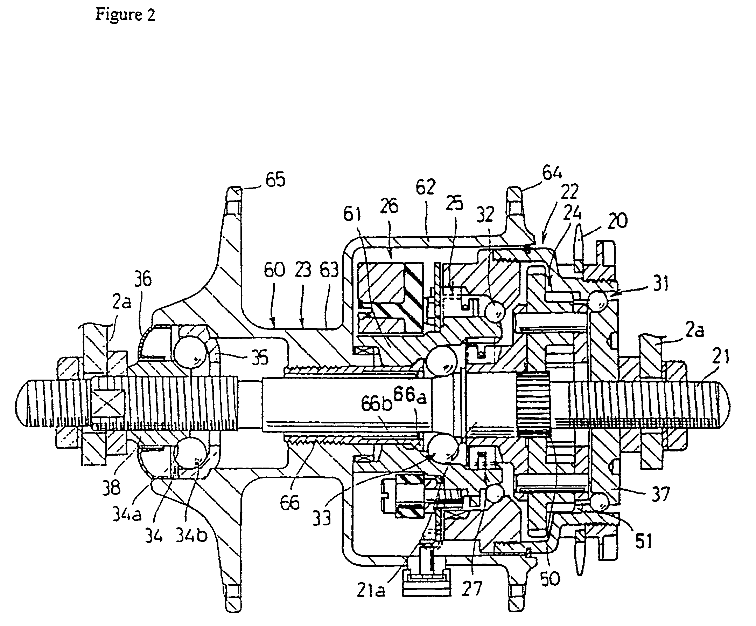

The internal shifter hub 10 is a two-step hub that includes downshifted and direct-coupled power transmission paths. This internal shifter hub 10 is mounted between a couple of rear fork ends 2a of the bicycle frame body 2, as shown in Figure 2. The internal shifter hub 10 comprises a hub axle 21 fixed in the rear fork ends 2a, a driver 22 mounted around the outside on one end of the hub axle 21 while allowed to move in a circle about the hub axle, a slave 23 that is disposed farther outward around the outside of the hub axle 21 and the driver 22 and that is linked to the rear wheel 7, a planetary gear mechanism 24 disposed around the inside of the driver 22, a clutch mechanism 25 for linking and disengaging the driver 22 and the slave 23, a clutch-switching mechanism 26 for switching the clutch mechanism 25, and a one-way clutch mechanism 27 for transmitting rotation in the travelling direction alone from the planetary gear mechanism 24 to the slave 23. The right end of the driver 22 (Figure 2) is rotatably supported by a bearing component 31 on the hub axle 21, and the left end is rotatably supported by a bearing component 32 in the slave 23. The two ends of the slave 23 are rotatably supported by bearing components 33 and 34 on the hub axle 21.

The hub axle 21 is a member that is fixed to the rear fork ends 2a of the bicycle frame body 2. Threaded portions for fixing or otherwise securing the axle in the rear fork ends 2a are formed on both ends of the hub axle 21. A large-diameter portion 21a is formed on the hub axle 21 somewhat to the right (in Figure 2) of the central section, and the sun gear 50 of the planetary gear mechanism 24 is formed on the right side of the large-diameter portion 21a. Hub cone members 37 and 38 having arm-shaped hub cone surfaces 31a and 34a for the bearing components 31 and 34, respectively, are screwed onto the mounting portions of the hub axle 21 that lie inward in relation to the rear fork ends 2a.

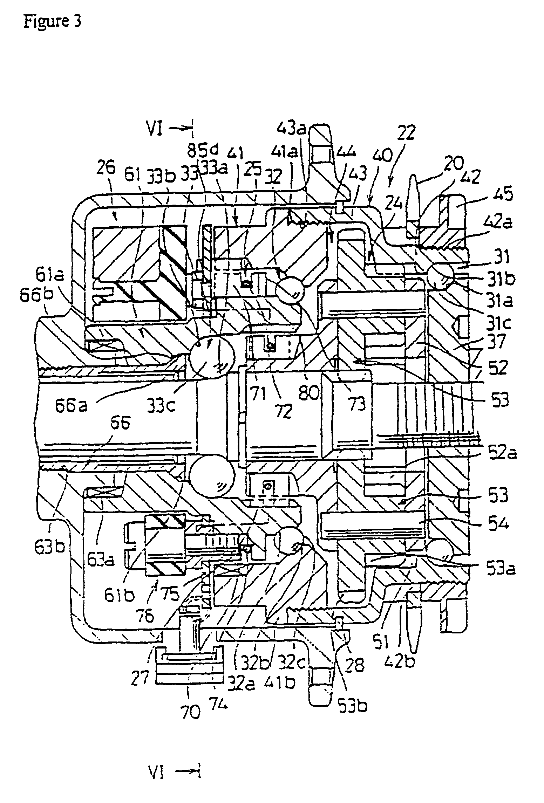

The driver 22 is a member for transmitting the rotation of the sprocket 20. As shown in Figure 3, the driver 22 comprises a first cylindrical component 40 (the right end of this component is rotatably supported by the bearing component 31), and a second cylindrical component 41 that is nonrotatably linked to the first cylindrical component 40 (the left end of the second cylindrical component is rotatably supported by the bearing component 32).

The first cylindrical component 40 comprises a small-diameter portion 42 on the right side of Figure 3, and a large-diameter portion 43 that is flared on the left side of the small-diameter portion 42. A housing space 44 for accommodating the planetary gear mechanism 24 is formed inside the first cylindrical component 40. The outer circumferential surface at the end of the small-diameter portion 42 is provided with an external thread 42a, and a lock nut 45 for fixing the sprocket 20 is screwed thereon. A sprocket attachment section 42b composed of outer serrations is formed on the outer circumferential surface of the small-diameter portion 42 in proximity to the external thread 42a, with the sprocket 20 nonrotatably attached. The inner-tooth gear 51 of the planetary gear mechanism 24 is formed on the inner circumferential surface of the small-diameter portion 42 on the side that faces the large-diameter portion 43. An arm-shaped ball race surface 31b for the bearing component 31 is formed on the inner circumferential surface at the end of the small-diameter portion 42. The bearing component 31 comprises the ball race surface 31b, the hub cone surface 31a, and a plurality of balls 31c interposed between the ball race surface 31b and the hub cone surface 31a.

An internal thread 43a, which is formed on the inner circumferential surface at the end of the large-diameter portion 43, is screwed onto an external thread 41a formed on the end face of the second cylindrical component 41, nonrotatably linking the second cylindrical component 41. A seal ring 28 for sealing the gap formed by the slave 23 is fitted over the outer circumferential surface of the large-diameter portion 43.

The second cylindrical component 41 is a member whose diameter is smaller than that of the first cylindrical component 40 in threaded engagement with the inner circumferential surface of the first cylindrical component. The external thread 41a to be threadably connected with the internal thread 43a is formed on the outer circumferential surface of the end section. A stop 41b that rests against the tip of the large-diameter portion 43 of the first cylindrical component 40 in proximity to the external thread 41a is formed on the outer circumferential surface of the second cylindrical component 41. The outside diameter of the stop 41b is essentially the same size as the outside diameter of the large-diameter portion 43 of the first cylindrical component 40. The bearing component 32 and the clutch mechanism 25 are disposed around the inside of the second cylindrical component 41. For this reason, the ball race surface 32b of the bearing component 32 and the ratchet teeth 70 of the clutch mechanism 25 are formed on the inner circumferential surface of the second cylindrical component 41. The bearing component 32 comprises the ball race surface 32b, a hub cone surface 32a formed on the outer circumferential surface at the end of a power transmitting body 61 (see below) for the slave 23, and a plurality of balls 32c interposed between the ball race surface 32b and the hub cone surface 32a.

Forming the driver 22 in such a manner into a two-part structure composed of the first cylindrical component 40 and second cylindrical component 41 makes it possible to mount the planetary gear mechanism 24 alongside the hub axle 21 without increasing the outside diameter of the section composed of the second cylindrical component 41 in comparison with the outside diameter of the section composed of the first cylindrical component 40 even when a bearing component 32 is provided. The outside diameter of the entire hub can therefore be reduced.

As shown in Figure 2, the slave 23 is a cylindrical member driven by the driver 22 and designed for rotating the rear wheel 7. The slave 23 comprises a hub shell 60 that is partially disposed around the outside of the driver 22, and a power transmitting body 61 that is fastened to the hub shell 60 by a fixing bolt 66 and that is disposed around the inside of the driver 22. This power transmitting body 61, in addition to functioning as a body for transmitting power from the driver 22 or the planetary gear mechanism 24 to the hub shell 60, also functions as a weight support for the clutch-switching mechanism 26 described below.

The hub shell 60, which may be a cylindrical member made of aluminum, has a large-diameter mechanism housing 62 for accommodating the driver 22, the clutch-switching mechanism 26, and the like, and a small-diameter, narrow cylindrical component 63 formed integrally with the mechanism housing 62. Hub flanges 64 and 65 for securing the spokes (not shown) of the rear wheel 7 are integrally formed on the outer circumferential surfaces of the mechanism housing 62 and narrow cylindrical component 63. As shown in Figure 3, the right end of the narrow cylindrical component 63 is provided with outer serrations 63a for nonrotatably securing the power transmitting body 61, and the inner circumferential surface is provided with an internal thread 63b for the threaded engagement of the fixing bolt 66. A space for accommodating the bearing component 34 is formed in the left end (Figure 2) of the narrow cylindrical component 63, and a ball race member 35 provided with a ball race surface 34b (which is an element of the bearing component 34) is secured in this space. The bearing component 34 comprises the hub cone surface 34a, the ball race surface 34b, and a plurality of balls 34c interposed between the ball race surface 34b and the hub cone surface 34a. A dust cap 36 is fitted over the bearing component 34.

The power transmitting body 61 may be a stepped cylindrical member made of chromium-molybdenum steel. As shown in Figure 3, inner serrations 61a for meshing with the outer serrations 63a of the narrow cylindrical component 63 are formed on the inner circumferential surface of the left end. The hub cone surface 32a for the bearing component 32 is formed on the outer circumferential surface at the right end of the power transmitting body 61, and ratchet teeth 80 constituting part of the one-way clutch mechanism 27 are formed on the inner circumferential surface of the right end. In addition, a ball race surface 33b for the bearing component 33 is formed on the inner circumferential surface in proximity to the ratchet teeth 80. The bearing component 33 comprises the ball race surface 33b, a hub cone surface 33a formed in the shape of an arm on the left end of the large-diameter portion 21a of the hub axle 21, and a plurality of balls 33c interposed between the hub cone surface 33a and the ball race surface 33b. A tapered section 61b is formed on the inner circumferential surface of the power transmitting body 61 in proximity to the section constituting the ball race surface 33b.

As shown in Figure 2, the fixing bolt 66 is a hollow cylindrical bolt, and the hub shell 60 and the power transmitting body 61 are firmly fastened in a concentric fashion. The head 66a of the fixing bolt 66 is provided with a tapered surface 66b for interlocking with the tapered section 61b, allowing the power transmitting body 61 and the hub shell 60 to be aligned and fastened.

As shown in Figure 3, the planetary gear mechanism 24 comprises the sun gear 50 formed on the hub axle 21, the inner-tooth gear 51 formed on the small-diameter portion 42 of the first cylindrical component 40 of the driver 22, a carrier 52 rotatably mounted on the large-diameter portion 21a of the hub axle 21, and three planetary gears 53 rotatably supported on the carrier 52. The carrier 52 is a member shaped as a collar flange with the hub axle 21 passing through it; and three gear housings 52a spaced at regular intervals in the circumferential direction are formed on the outer circumferential surface of this member. Three gear axles 54 for rotatably supporting the planetary gears 53 are fixed to the carrier 52. The planetary gears 53 have a small-diameter first gear element 53a for meshing with the inner-tooth gear 51, and a large-diameter second gear element 53b for meshing with the sun gear 50. The first gear element 53a and the second gear element 53b are formed adjacent to each other in the axial direction. The planetary gears 53 are thus composed of two gear elements 53a and 53b, making it possible to obtain a gear ratio corresponding to a cross ratio with a smaller number of teeth on the inner-tooth gear than in the case of a single gear element.

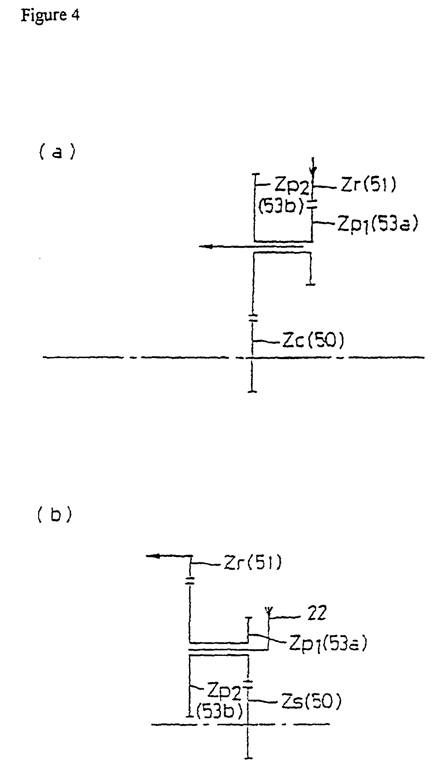

Here, as shown in Figure 4a, the gear ratio G_{R} can be expressed by the following equation for a downshift in the inner-tooth gear input and carrier output:${\text{G}}_{\text{R}} {\text{= 1/(1 + (Z}}_{\text{s}} {\text{/Z}}_{\text{r}} {\text{) × (Z}}_{\text{p2}} {\text{/Z}}_{\text{p1}} \text{)),}$ where Zₛ is the number of teeth on the sun gear 50, Zᵣ is the number of teeth on the inner-tooth gear 51, Zₚ₁ is the number of teeth on the first gear element 53a of a planetary gear 53, and Zₚ₂ is the number of teeth on the second gear element 53b.

Here, the following result may be obtained if the number of teeth Zₛ on the sun gear is set to 15, the number of teeth Zᵣ on the inner-tooth gear to 57, the number of teeth Zₚ₁ on the first gear element to 28, and the number of teeth Zₚ₂ on the second gear element to 13:${\text{G}}_{\text{R}} \text{= 1/(1 + (15/57) × (13/28)) = 0.891}$

Consequently, the gear ratio G_{R} is 0.891, and a single turn of the driver 22 is transmitted to the slave 23 after being reduced in speed to 0.891 revolutions.

The gear ratio of the planetary gear mechanism 24 should fall within a range of 0.8-0.95. In this case, the start dash can be accelerated, and the outside diameter of the internal shifter hub 10 reduced even when downshifting is performed at a cross ratio.

The gear ratio G_{R} can be expressed by the following equation when downshifting is performed with the aid of planetary gears consisting of a single gear element.${\text{G}}_{\text{R}} {\text{= 1/ (1 + (Z}}_{\text{s}} {\text{/Z}}_{\text{r}} \text{))}$

In this case, the gear ratio G_{R} is determined solely by the number of teeth Zᵣ on the inner-tooth gear and the number of teeth Zₛ on the outer-tooth gear. Let us solve the equation 0.891 = 1/(1 + (15/Zᵣ)) in an attempt to obtain a gear ratio of 0.891 with the aforementioned cross ratio by assuming that the number of teeth Zₛ on the sun gear is 15. As a result, the number of teeth Zᵣ on the inner-tooth gear is 123, and the outside diameter of the driver 22 is increased at least twofold in comparison with a case in which the gear has two gear elements.

As shown in Figures 3, 5, and 6, the clutch mechanism 25 has ratchet teeth 70 (which are formed on the inner circumferential surface of the second cylindrical component 41 of the driver 22), two clutch pawls 71 capable of meshing with the ratchet teeth 70, and a spring member 72 for energizing the clutch pawls 71. The ratchet teeth 70 are formed as sawteeth on the inner circumferential surface of the second cylindrical component 41. The clutch pawls 71 are mounted on the outer circumferential surface of the power transmitting body 61 while allowed to alternate between a linked state in which they mesh with the ratchet teeth 70, and a disengaged state in which they are separated from the ratchet teeth 70. Pawl housings 73 for accommodating the clutch pawls 71 are provided at two positions on the outer circumferential surface of the power transmitting body 61. The spring member 72, which is positioned in a wound state in a groove 74 formed in the outer circumferential surface of the power transmitting body 61, pushes the clutch pawls 71 into a linked state. It is only when the clutch pawls 71 are in a linked state and the driver 22 rotates in the travelling direction that the rotation of the clutch mechanism 25 is transmitted to the power transmitting body 61 of the slave 23.

The clutch-switching mechanism 26 comprises a control plate 75 for switching the clutch pawls 71 between a linked state and a disengaged state, a moving mechanism 76 for moving the control plate 75 in a reciprocating fashion about the hub axle, and a weight support doubling as the power transmitting body 61.

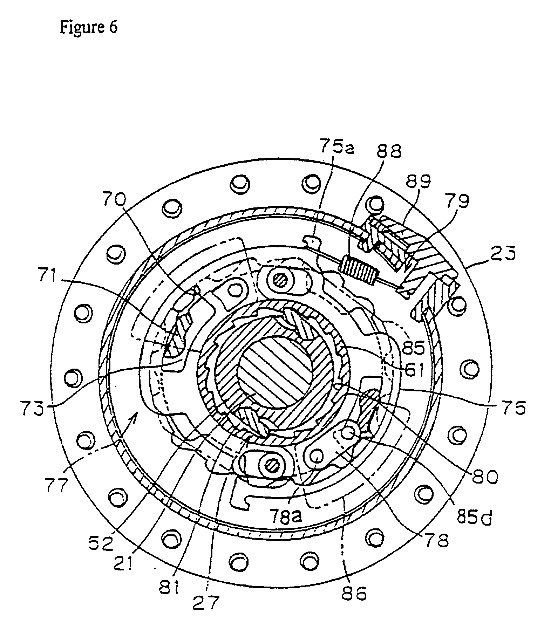

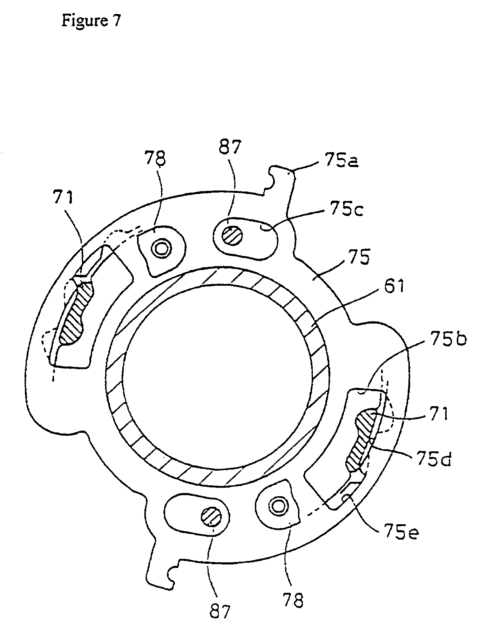

As shown in Figure 7, the control plate 75 is a flat member shaped as a modified ring and rotatably supported in its central portion by the power transmitting body 61. A hook 75a extending radially outward is formed on the outer edge of the control plate 75. In addition, two control windows 75b for controlling the clutch pawls 71 are formed between the inner and outer circumferences. The clutch pawls 71 are disposed such that they extend from the control windows 75b in the direction of the moving mechanism 76. The control windows 75b are provided with disengaging frames 75d for holding the clutch pawls 71 in a disengaged state, and with linking frames 75e for switching the pawls to a linked state. The clutch pawls 71 energized by the spring member 72 can be raised into a linked state by shaping the linking frames 75e such that they extend radially outward from the disengaging frames 75d. The hook 75a, the control windows 75b, and all the other components are set apart 180 degrees from each other (depending on the number of elements) to achieve balanced rotation. In addition, two through holes 75c accommodating the rocking axles 87 of weight retainers 85 (see below) are formed between the inner and outer circumferences. The control plate 75 is normally held in a disengaged position (shown in Figures 6 and 7) by the spring mechanism 79 described below. At this time, the tips of the clutch pawls 71 are stopped by the disengaging frames 75d of the control windows 75b, and the pawls are held in a disengaged state.

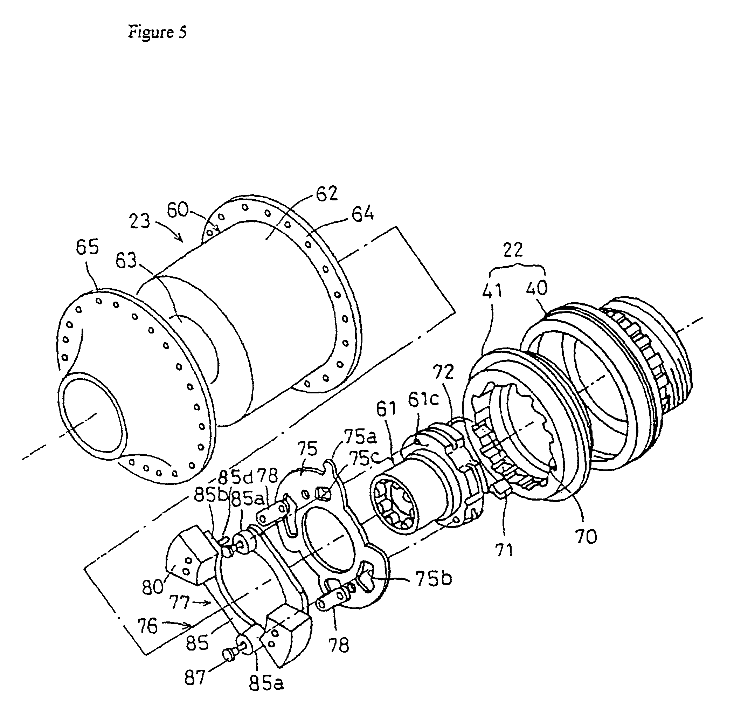

As shown in Figure 5, the moving mechanism 76, which is disposed on the left side of the control plate 75, comprises two rocking weight members 77, links 78 for linking the two respective weight members 77 and the control plate 75, and a spring mechanism 79 for energizing the control plate 75 clockwise in Figure 6.

The weight members 77 comprise two weight retainers 85 swingably mounted on the end face 61c of the power transmitting body 61, and weights 86 mounted on the tips of the weight retainers 85. The two weight retainers 85 may be made of a polyacetal resin. The weight retainers 85 are formed such that they form a curve around the power transmitting body 61, and are positioned in the same way 180 degrees apart from each other around the power transmitting body 61. Bosses 85a are formed integrally with the bases of the weight retainers 85, and weight mounting components 85b composed of two protruding pins are formed integrally with the tips of the weight retainers. The rocking axles 87 pass through the bosses 85a. The rocking axles 87 also pass via the through holes 75c, and the tips of these axles are fixed to the power transmitting body 61. In addition, link pins 85d are formed integrally with the tips of the weight retainers 85 on the sides opposite from the weight mounting components 85b. The link pins 85d are used for the rotatable mounting of the links 78. The weights 86, which may be fan-shaped members made of lead or steel, are fixed by the two pins of weight mounting components 85c.

The links 78 are members for rotating the braking member 75 in response to the movement of the tips of the weight members 78, which swing about their bases. The control plate 75 and the tips of the weight retainers 85 are linked at both ends thereof. The links 78 are flat members made of metal. One end of each link is provided with a round hole for inserting the link pins 85d, and the other end is provided with a round hole for inserting a link pin 78a, which is used to achieve linkage with the braking plate 75.

As shown in Figure 6, the spring mechanism 79 has a coil spring 88, one end of which is secured to the hook 75a, and a spring force adjustment mechanism 89 for adjusting the spring force of the coil spring 88. Shift timing can be adjusted by adjusting the spring force of the coil spring 88. The shift timing can also be varied by replacing the weights 86.

As shown in Figure 6, the one-way clutch 27, which may be a pawl type, comprises ratchet teeth 80 formed on the inner circumferential surface of the power transmitting body 61, clutch pawls 81 mounted on the outer circumferential surface of the carrier 52 of the planetary gear mechanism 24 while allowed to alternate between a linked state and a disengaged state, and a spring member (not shown) for energizing the clutch pawls 81 into a linked state. In the one-way clutch 27, the clutch pawls 81 are normally raised into a linked state, and the rotation of the carrier 52 is transmitted to the power transmitting body 61 when this carrier rotates in the travelling direction. No rotation is transmitted when the power transmitting body 61 rotates in the travelling direction at a higher speed than does the carrier 52.

The internal shifter hub 10 has the following paths because of the presence of such a planetary gear mechanism 24, clutch mechanism 25, clutch-switching mechanism 26, and one-way clutch 27:
a downshifted power transmission path composed of the driver 22, inner-tooth gear 50, planetary gear mechanism 24, carrier 52, and slave 23; and
a direct-coupled power transmission path composed of the driver 22, clutch mechanism 25, and slave 23.

When the rider steps on the pedals during startup, propelling the bicycle, the resulting rotation is transmitted to the driver 22 via the sprocket 20. At this time, the control plate 75 is in a disengaged position, and the clutch pawls 71 are held in a disengaged state by the control plate 75. Consequently, there is no linkage between the driver 22 and the power transmitting body 61, and the rotation of the driver 22 is transmitted to the power transmitting body 61 along the downshifted power transmission path. As a result, the rotation of the sprocket 20 during startup is transmitted to the hub shell 60 after being reduced in speed to 0.891, for example. It is therefore possible to lightly step on the pedals during startup, achieving a start dash.

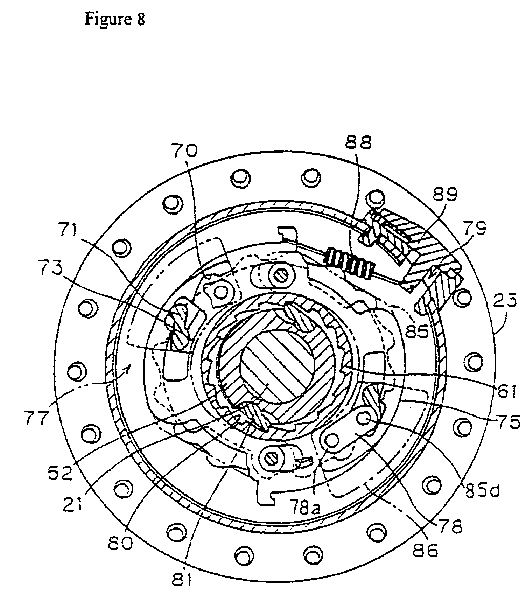

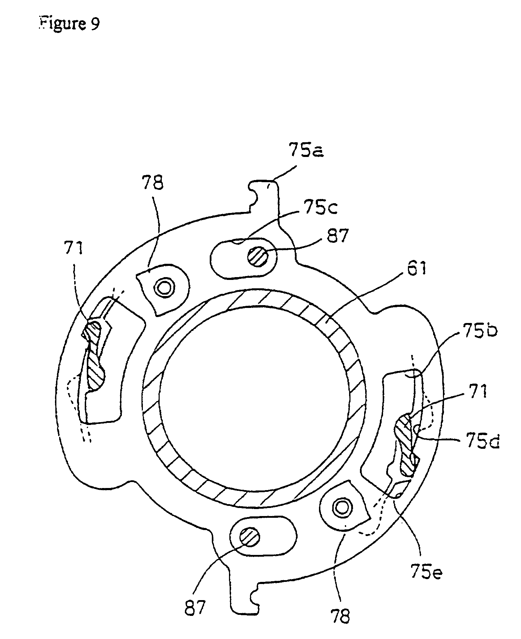

As shown in Figures 8 and 9, the weight members 77 swing outward against the action of the energizing force exerted by the coil spring 88 of the control plate 75 when the power transmitting body 61 achieves a rotational speed above a certain level. This level is determined by the adjustment of the spring mechanism 79, the mass of the weights, or the like. When the weight members 77 move in this manner, the control plate 75 is rotated counterclockwise in Figure 8 through the intermediary of the links 78 until it reaches a linked position. When the control plate 75 has reached the linked position, the linking frames 75e of the control windows 75b position themselves at the tips of the clutch pawls 71, and the clutch pawls 71 are raised into a linked state by the energizing force of the spring member 72. As a result, the rotation of the driver 22 in the travelling direction is transmitted directly to the power transmitting body 61 along the direct-coupled power transmission path, and the rotation of the sprocket 20 is transmitted unchanged to the rear wheel 7. Consequently, an upshift is performed once the rotational speed has exceeded a certain level. There is no reduction in the transmission efficiency of the planetary gear mechanism 24 during this regular ride because the driver 22 and the slave 23 are coupled directly.

When the rotational speed of the power transmitting body 61 drops below a prescribed level during cornering or the like, the weight members 77 are returned to their initial disengaged state by the coil spring 88, and the rotation of the driver 22 is transmitted to the slave 23 along the downshifted power transmission path.

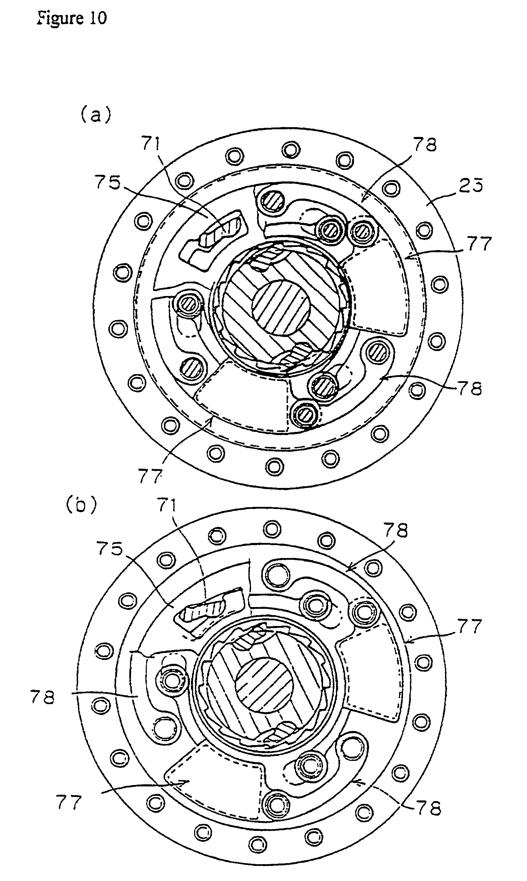

The number of weight members or clutch pawls is not limited to two. One member or pawl can also be used, as can three or more members or pawls. When three or more members or pawls are used, they should be arranged at regular intervals according to their number. When, for example, there are three weight members 77, they should be arranged in the same way 120 degrees apart from each other about the hub axle, as shown in Figure 10a. Furthermore, a single clutch pawl 71 can be used, as can a plurality of such pawls. In this case, the weight members 77 swing outward when the rotational speed has exceeded a certain limit (as shown in Figure 10b), the control plate 75 is rotated through the intermediary of the links 78, and the clutch pawls 71 rise to a linked state from the disengaged state. Thus, the centrifugal force increases with an increase in the number of weight members 77, and the braking plate 75 rotates with more stability.

The structure of the power transmitting mechanism is not limited to a planetary gear mechanism alone and may also include cyclo shifters (registered trade name) and other shifting mechanisms.

In terms of mounting direction, the cylindrical bolt is not limited to the side that faces the weight support and may be installed on the side that faces the hub shell 60.

In the embodiment described above, the speed was changed from downshifted to directly coupled, but changing the speed from directly coupled to upshifted is also possible. In this case, the driver 22 should be linked to the carrier 52, and power should be transmitted from the carrier 52 to the inner-tooth gear 51, as shown in Figure 4b. At this time, a high gear ratio can be obtained with an inner-tooth gear whose outside diameter is less than that of a single gear element if the second gear element 53b (which, of the two gear elements 53a and 53b, has the larger diameter) is caused to mesh with the inner-tooth gear 51, and the small-diameter first gear element 53a is caused to mesh with the sun gear 50. In addition, the carrier 52 and the driver 22 should be linked together with the aid of the structure shown in Figure 4a if the goal is obtain an upshifted ratio corresponding to a cross ratio.

According to the present invention, the weight support and the slave are linked by a cylindrical bolt disposed coaxially with the hub axle, making it possible to facilitate the assembly or disassembly of the weight support and the slave merely be tightening or loosening the cylindrical bolt. In addition, providing the cylindrical bolt with a tapered surface or the like makes it easier to align the two demountable members.

## Claims

1. An internal bicycle shifter hub (10) for changing the speed of rotation of an input unit at a selected gear ratio and transmitting the result to an output unit, and allowing said gear ratio to be switched by centrifugal force, wherein said internal bicycle shifter hub comprises:
a hub axle (21) fixable on a bicycle frame;
a driver (22) that can rotate about said hub axle and that can be linked to said input unit;
a slave (23) that can rotate about said hub axle and that can be linked to said output unit;
a power transmitting mechanism (24) disposed between said driver and slave and designed to change the speed of rotation received from said driver and to transmit the result to said slave;
a clutch mechanism (25) for linking and disengaging said slave and said driver;
a clutch-switching mechanism (26) having a weight member (77) that is swung by centrifugal force from a first position on the inner circumference to a second position on the outer circumference, a control member (75) capable of moving in a circle about said hub axle between a linked position in which said clutch mechanism is in a linked state and a disengaged position in which said mechanism is in a disengaged state, and that is capable of moving in a circle in response to the swinging of said weight member, and a weight support (61) that carries said weight member and control member, that can rotate about said hub axle, that is linked to said driver via said clutch mechanism, and that is linked to the output side of said power transmitting mechanism; and
a cylindrical bolt (66) that is disposed coaxially with said hub axle and that links and fastens said weight support and said slave.

2. An internal bicycle shifter hub as defined in Claim 1, wherein said weight support (61) and said slave (23) are nonrotatably linked by a serrated joint.

3. An internal bicycle shifter hub as defined in either Claim 1 or Claim 2, wherein said weight support (61) has a sloping section (61b) on the inner circumferential surface of the mounting hole for said cylindrical bolt; and said cylindrical bolt (66) has, on the outer circumferential surface of one of its ends, a protruding section provided with a sloping surface (66a) for interlocking with said sloping section.

4. An internal bicycle shifter hub as defined in any preceding claim, wherein said weight support (61) vis made of an alloy steel, and said slave (23) is made of a light metal.

5. An internal bicycle shifter hub as defined in any preceding claim, wherein said clutch mechanism (25) comprises: (71)
a linking pawl element (71) that is mounted on the outer circumferential surface of said weight support (61) while allowed to swing between said linked state and disengaged state, and that is switched between said linked state and disengaged state by said control member 75;
a linking tooth element (70) that is provided to the inner circumferential surface of said driver (22, 41) and that is capable of stopping the linking pawl element in said linked state; and
an energizing member (72) for pushing said linking pawl element toward said linked state.

6. An internal bicycle shifter hub as defined in any preceding claim, further comprising a one-way clutch (27) that is disposed between said weight support (61) and the output side of said power transmitting mechanism (24) and that causes said weight support to rotate in the travelling direction in response to the rotation of said power transmitting mechanism in the travelling direction.

7. An internal bicycle shifter hub as defined in any of Claims 1 to 5, wherein said power transmitting mechanism is a planetary gear mechanism (24) comprising an inner-tooth gear provided to said driver, a sun gear provided to said hub axle, a plurality of planetary gears that mesh with said inner-tooth gear and sun gear, and a frame body that is capable of rotating about said hub axle and that is rotatably supported on said planetary gears.

## Patentansprüche

1. Eine innere Fahrrad-Schalthebelnabe (10) zum Ändern der Drehgeschwindigkeit einer Eingabeeinheit bei einem ausgewählten Übersetzungsverhältnis und Übertragen des Ergebnisses an eine Ausgabeeinheit, und Ermöglichen des Schaltens des Übersetzungsverhältnisses durch Zentrifugalkraft, wobei die innere Fahrrad-Schalthebelnabe Folgendes beinhaltet:
eine an einem Fahrradrahmen fixierbare Nabenachse (21);
einen Mitnehmer (22), der sich um die Nabenachse drehen kann und der mit der Eingabeeinheit verbunden werden kann;
eine Nebenvorrichtung (23), die sich um die Nabenachse drehen kann und mit der Ausgabeeinheit verbunden werden kann;
einen Kraftübertragungsmechanismus (24), der zwischen dem Mitnehmer und der Nebenvorrichtung angeordnet ist und entworfen ist, um die von dem Mitnehmer empfangene Drehgeschwindigkeit zu ändern und das Ergebnis auf die Nebenvorrichtung zu übertragen;
einen Kupplungsmechanismus (25) zum Verbinden und Auskuppeln der Nebenvorrichtung und des Mitnehmers;
einen Kupplungs-Umschaltmechanismus (26) mit einem Gewichtsteil (77), das durch Zentrifugalkraft von einer ersten Position auf dem inneren Umfang in eine zweite Position auf dem äußeren Umfang geschwungen wird, einem Steuerteil (75), der sich in einem Kreis um die Nabenachse zwischen einer verbundenen Position, in weicher sich der Kupplungsmechanismus in einem verbundenen Zustand befindet, und einer ausgekuppelten Position, in welcher sich der Mechanismus in einem ausgekuppelten Zustand befindet, bewegen kann, und das sich in einem Kreis als Reaktion auf das Schwingen des Gewichtsteils bewegen kann, und eine Gewichtsstütze (61), die den Gewichtsteil und den Steuerteil, die sich um die Nabenachse drehen kann, die über den Kupplungsmechanismus mit dem Mitnehmer verbunden ist, und die mit der Ausgabeseite des Kraftübertragungsmechanismus verbunden ist, trägt; und
einen zylindrischer Bolzen (66), der koaxial mit der Nabenachse angeordnet ist und der die Gewichtsstütze und die Nebenvorrichtung verbindet und befestigt.

2. Innere Fahrrad-Schalthebelnabe gemäß Anspruch 1, wobei die Gewichtsstütze (61) und die Nebenvorrichtung (23) nicht drehend durch ein gezahntes Verbindungsstück verbunden sind.

3. Innere Fahrrad-Schalthebelnabe gemäß Anspruch 1 oder Anspruch 2, wobei die Gewichtsstütze (61) einen geneigten Abschnitt (61b) auf der inneren Umfangsfläche des Montagelochs für den zylindrischen Bolzen aufweist; und der zylindrische Bolzen (66) auf der äußeren Umfangsfläche eines seiner Enden einen mit einer geneigten Fläche (66a) versehenen vorstehenden Abschnitt zum Verriegeln mit dem geneigten Abschnitt aufweist.

4. Innere Fahrrad-Schalthebelnabe gemäß einem der vorhergehenden Ansprüche, wobei die Gewichtsstütze (61) aus einem legierten Stahl gefertigt ist und die Nebenvorrichtung (23) aus einem Leichtmetall gefertigt ist.

5. Innere Fahrrad-Schalthebelnabe gemäß einem der vorhergehenden Ansprüche, wobei der Kupplungsmechanismus (25) Folgendes beinhaltet:
ein Verbindungs-Klinkenelement (71), das auf der äußeren Umfangsfläche der Gewichtsstütze (61) montiert ist, während es zwischen dem verbundenen Zustand und dem ausgekuppelten Zustand schwingen kann, und das durch den Steuerteil (75) zwischen dem verbundenen Zustand und dem ausgekuppelten Zustand geschaltet wird;
ein Verbindungs-Zahnelement (70), das auf der inneren Umfangsfläche des Mitnehmers (22, 41) bereitgestellt ist und das das Verbindungs-Klinkenelement in dem verbundenen Zustand stoppen kann; und
einen Erregerteil (72), um das Verbindungs-Klinkenelement in Richtung des verbundenen Zustands zu drücken.

6. Innere Fahrrad-Schalthebelnabe gemäß einem der vorhergehenden Ansprüche, die eine Einwegkupplung (27), die zwischen der Gewichtsstütze (61) und der Ausgabeseite des Kraftübertragungsmechanismus (24) angeordnet ist, und die das Drehen der Gewichtsstütze in Bewegungsrichtung als Reaktion auf das Drehen des Kraftübertragungsmechanismus in Bewegungsrichtung bewirkt, beinhaltet.

7. Innere Fahrrad-Schalthebelnabe gemäß einem der Ansprüche 1 bis 5, wobei der Kraftübertragungsmechanismus ein Planetengetriebemechanismus (24) ist, der ein inneres, dem Mitnehmer bereitgestelltes Zahnradgetriebe, ein der Nabenachse

## Revendications

1. Un moyeu de changement de vitesse pour bicyclette interne (10) destiné à changer la vitesse de rotation d'un organe d'entrée à un rapport d'engrenage sélectionné et à transmettre le résultat à un organe de sortie, et à permettre la commutation dudit rapport d'engrenage par force centrifuge, dans lequel ledit moyeu de changement de vitesse pour bicyclette interne comporte :
un axe de moyeu (21) qui peut être fixé sur un cadre de bicyclette;
un pignon menant (22) qui peut tourner autour dudit axe de moyeu et qui peut être couplé audit organe d'entrée ;
un pignon récepteur (23) qui peut tourner autour dudit axe de moyeu et qui peut être couplé audit organe de sortie ;
un mécanisme de transmission de puissance (24) disposé entre ledit pignon menant et ledit pignon récepteur et conçu pour changer la vitesse de rotation reçue dudit pignon menant et pour transmettre le résultat audit pignon récepteur ;
un mécanisme d'embrayage (25) destiné à coupler et à désengrener ledit pignon récepteur et ledit pignon menant;
un mécanisme de commutation d'embrayage (26) ayant un élément formant poids (77) que la force centrifuge fait basculer d'une première position sur la circonférence interne jusqu'à une deuxième position sur la circonférence externe, un élément de commande (75) capable de se déplacer en un cercle autour dudit axe de moyeu entre une position couplée dans laquelle ledit mécanisme d'embrayage est dans un état couplé et une position désengrenée dans laquelle ledit mécanisme est dans un état désengrené, et qui est capable de se déplacer en un cercle en réponse au basculement dudit élément formant poids, et un support de poids (61) qui porte ledit élément formant poids et ledit élément de commande, qui peut tourner autour dudit axe de moyeu, qui est couplé audit pignon menant par le biais dudit mécanisme d'embrayage et qui est couplé au côté de sortie dudit mécanisme de transmission de puissance ; et
un boulon cylindrique (66) qui est disposé de façon coaxiale audit axe de moyeu et qui couple et attache ledit support de poids et ledit pignon récepteur.

2. Un moyeu de changement de vitesse pour bicyclette interne tel que défini dans la revendication 1, dans lequel ledit support de poids (61) et ledit pignon récepteur (23) sont couplés par une articulation dentelée de façon à ce qu'ils ne puissent pas tourner.

3. Un moyeu de changement de vitesse pour bicyclette interne tel que défini soit dans la revendication 1, soit dans la revendication 2, dans lequel ledit support de poids (61) a une section inclinée (61b) sur la surface circonférentielle interne du trou de montage destinée audit boulon cylindrique ; et ledit boulon cylindrique (66) a, sur la surface circonférentielle externe de l'une de ses extrémités, une section faisant saillie pourvue d'une surface inclinée (66a) destinée à se verrouiller réciproquement avec ladite section inclinée.

4. Un moyeu de changement de vitesse pour bicyclette interne tel que défini dans n'importe quelle revendication précédente, dans lequel ledit support de poids (61) est réalisé en un acier allié, et ledit pignon récepteur (23) est réalisé en un métal léger.

5. Un moyeu de changement de vitesse pour bicyclette interne tel que défini dans n'importe quelle revendication précédente, dans lequel ledit mécanisme d'embrayage (25) comporte :
une unité formant cliquet de couplage (71) qui est montée sur la surface circonférentielle externe dudit support de poids (61) tout en ayant la possibilité de basculer entre ledit état couplé et ledit état désengrené, et que ledit élément de commande (75) fait commuter entre ledit état couplé et ledit état désengrené ;
une unité formant dent de couplage (70) qui est prévue sur la surface circonférentielle interne dudit pignon menant (22, 41) et qui est capable de bloquer l'unité formant cliquet de couplage dans ledit état couplé ; et
un élément d'excitation (72) destiné à pousser ladite unité formant cliquet de couplage vers ledit état couplé.

6. Un moyeu de changement de vitesse pour bicyclette interne tel que défini dans n'importe quelle revendication précédente, comportant de plus un embrayage unidirectionnel (27) qui est disposé entre ledit support de poids (61) et le côté de sortie dudit mécanisme de transmission de puissance (24) et qui amène ledit support de poids à tourner dans le sens de la marche en réponse à la rotation dudit mécanisme de transmission de puissance dans le sens de la marche.

7. Un moyeu de changement de vitesse pour bicyclette interne tel que défini dans n'importe lesquelles des revendications 1 à 5, dans lequel ledit mécanisme de transmission de puissance est un mécanisme à engrenages planétaires (24) comportant un engrenage de dent interne prévu sur ledit pignon menant, un planétaire prévu sur ledit axe de moyeu, une pluralité d'engrenages planétaires qui se mettent en prise avec ledit engrenage de dent interne et ledit planétaire, et un corps de cadre qui est capable de tourner autour dudit axe de moyeu et qui est soutenu de façon à pouvoir tourner sur lesdits engrenages planétaires.
